(19) Europäisches Patentamt
European Patent Office
Office européen des brevets

(11) EP 2 995 633 A1

(12) # EUROPEAN PATENT APPLICATION
published in accordance with Art. 153(4) EPC

(43) Date of publication:
**16.03.2016 Bulletin 2016/11**

(21) Application number: **14795309.5**

(22) Date of filing: **24.04.2014**

(51) Int Cl.:
***C08G 59/24*** *(2006.01)* ***C08L 63/00*** *(2006.01)*

(86) International application number:
**PCT/JP2014/061601**

(87) International publication number:
**WO 2014/181699 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.05.2013 JP 2013099976**

(71) Applicant: **Daicel Corporation**
**Osaka-shi, Osaka 530-0011 (JP)**

(72) Inventor: **NAKAMURA, Ryota**
**Ohtake-shi**
**Hiroshima 739-0695 (JP)**

(74) Representative: **Grünecker Patent- und Rechtsanwälte**
**PartG mbB**
**Leopoldstraße 4**
**80802 München (DE)**

(54) **CURABLE EPOXY RESIN COMPOSITION AND CURED PRODUCT THEREOF**

(57) An object of the present invention is to provide a curable epoxy resin composition, which is cured to provide a cured product having a high glass-transition temperature and particularly having excellent balance between heat resistance and transparency.

The present invention relates to a curable epoxy resin composition comprising an alicyclic epoxy compound (A) represented by the following formula (1) and a curing agent (B). The curable epoxy resin composition further preferably comprises a curing accelerator (C).

[Formula 1]

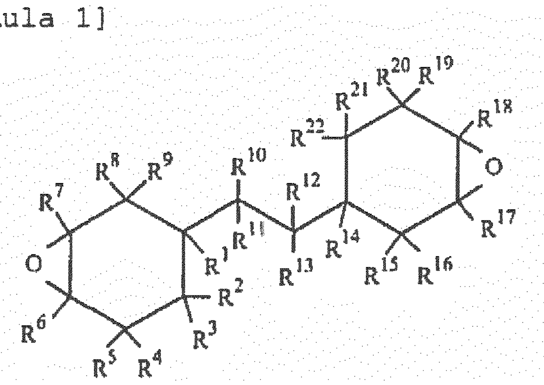

(1)

wherein $R^1$ to $R^{22}$, which may be the same or different, each represent a hydrogen atom, a methyl group or an ethyl group.

EP 2 995 633 A1

**Description**

Technical Field

The present invention relates to a curable epoxy resin composition and a cured product thereof. The present application claims the priority right of Japanese Patent Application No. 2013-099976, filed May 10, 2013 to the Japan Patent Office, the contents of which are incorporated herein.

Background Art

It is known that a curable epoxy resin composition comprising an epoxy compound as an essential component is cured to provide a cured product (resin cured product) excellent in e.g., electrical characteristics, moisture resistance and heat resistance. Such a curable epoxy resin composition is applied to various uses including a coating agent, an ink, an adhesive, a sealant, a sealing agent, a resist, a composite material, a transparent substrate, a transparent film or sheet, an optical material (e.g., an optical lens), an insulating material, a stereolithographic material and an electronic material (e.g., an electronic paper, a touch panel, a solar cell substrate, an optical waveguide, a light guide plate, a holographic memory).

As the curable epoxy resin composition, for example, a composition comprising an alicyclic epoxy compound such as 3,4-epoxycyclohexylmethyl(3,4-epoxy)cyclohexane carboxylate, as an essential component, is known (e.g., Patent Literatures 1 to 3). Such a curable epoxy resin composition, since it comprises an alicyclic epoxy compound, is known to provide a cured product having excellent heat resistance.

Citation List

Patent Literature

Patent Literature 1: Japanese Patent Laid-Open No. 63-264625
Patent Literature 2: Japanese Patent Laid-Open No. 63-012623
Patent Literature 3: Japanese Patent Laid-Open No. 59-011317

Summary of Invention

Technical Problem

Recently, a curable epoxy resin composition has been increasingly used in various fields. Along with this, the levels of properties (such as heat resistance and transparency) required for a cured product have been increased. Because of this, cured products obtained from the curable epoxy resin compositions described in Patent Literatures 1 to 3 mentioned above are not sufficient in heat resistance and transparency depending upon the use.

Accordingly, an object of the present invention is to provide a curable epoxy resin composition, which is cured to provide a cured product having a high glass-transition temperature and particularly having excellent balance between heat resistance and transparency, and provide a cured product thereof.

Solution to Problem

The present inventors have conducted intensive studies with a view to solving the aforementioned problems. As a result, they found that a curable epoxy resin composition comprising a predetermined alicyclic epoxy compound and a curing agent as essential components is cured to provide a cured product having a high glass-transition temperature and particularly having excellent balance between heat resistance and transparency, and accomplished the present invention.

More specifically, the present invention provides a curable epoxy resin composition comprising an alicyclic epoxy compound (A) represented by the following formula (1):

[Formula 1]

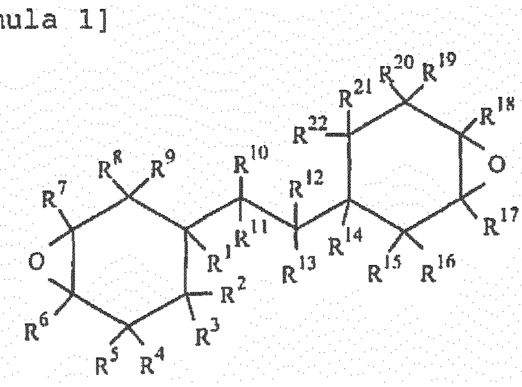

(1)

wherein $R^1$ to $R^{22}$, which may be the same or different, each represent a hydrogen atom, a methyl group or an ethyl group, and a curing agent (B).

The present invention provides the curable epoxy resin composition mentioned above, further comprising a curing accelerator (C).

The present invention provides a cured product obtained by curing the curable epoxy resin composition mentioned above.

More specifically, the present invention relates to the followings.

[1] A curable epoxy resin composition comprising an alicyclic epoxy compound (A) represented by the above formula (1), and a curing agent (B).
[2] The curable epoxy resin composition according to [1], wherein all of $R^1$ to $R^{22}$ in the above formula (1) represent a hydrogen atom.
[3] The curable epoxy resin composition according to [1] or [2], wherein the alicyclic epoxy compound (A) contains not more than 5% of a regioisomer (a structure isomer different in position of an epoxy group).
[4] The curable epoxy resin composition according to any one of [1] to [3], wherein the content of the alicyclic epoxy compound (A) relative to the curable epoxy resin composition (100 wt%) is 0.1 wt% or more and less than 100 wt%.
[5] The curable epoxy resin composition according to any one of [1] to [4], wherein the content of the alicyclic epoxy compound (A) relative to the total amount of cationic curable compounds comprised in the curable epoxy resin composition is 1 to 100 wt%.
[6] The curable epoxy resin composition according to any one of [1] to [5], wherein the curing agent (B) is an acid anhydride curing agent.
[7] The curable epoxy resin composition according to [6], wherein the acid anhydride curing agent is an anhydride of a saturated monocyclic hydrocarbon dicarboxylic acid.
[8] The curable epoxy resin composition according to any one of [1] to [7], wherein the content of the curing agent (B) relative to the total amount (100 parts by weight) of cationic curable compounds comprised in the curable epoxy resin composition is 50 to 200 parts by weight.
[9] The curable epoxy resin composition according to any one of [1] to [8], wherein the content ratio of the curing agent (B) is 0.5 to 1.5 equivalents per one equivalent of an epoxy group in all compounds having an epoxy group and comprised in the curable epoxy resin composition.
[10] The curable epoxy resin composition according to any one of [1] to [9], further comprising a curing accelerator (C).
[11] The curable epoxy resin composition according to [10], wherein the content of the curing accelerator (C) relative to the total amount (100 parts by weight) of cationic curable compounds comprised in the curable epoxy resin composition is 0.01 to 5 parts by weight.
[12] The curable epoxy resin composition according to any one of [1] to [11], comprising at least one hydroxyl-group containing compound selected from the group consisting of ethylene glycol, diethylene glycol, propylene glycol and glycerin.
[13] A cured product obtained by curing any one of the curable epoxy resin compositions [1] to [12].

Advantageous Effects of Invention

The curable epoxy resin composition of the present invention, since it has the aforementioned constitution, is cured to provide a cured product having a high glass-transition temperature and particularly having excellent balance between heat resistance and transparency.

Description of Embodiments

<Curable epoxy resin composition>

The curable epoxy resin composition of the present invention is a curable epoxy resin composition comprising an alicyclic epoxy compound (A) represented by the following formula (1) (sometimes, simply referred to as an "alicyclic epoxy compound (A)") and a curing agent (B) as essential components. The curable epoxy resin composition of the present invention may further comprise components other than the aforementioned essential components (components (A) and (B)), if necessary.

[Formula 2]

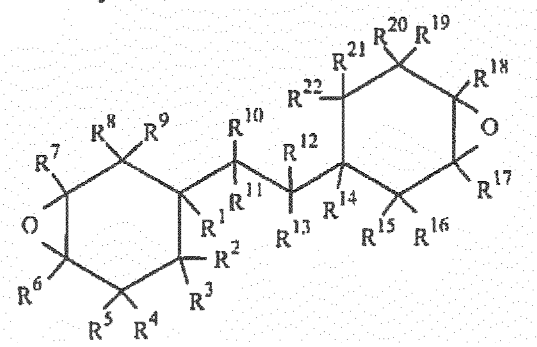

(1)

[Alicyclic epoxy compound (A)]

In the curable epoxy resin composition of the present invention, the alicyclic epoxy compound (A) is a compound represented by the above formula (1). In the formula (1), $R^1$ to $R^{22}$, which may be the same or different, each represent a hydrogen atom, a methyl group or an ethyl group. In particular, $R^1$ to $R^{22}$ each preferably represent a hydrogen atom and particularly preferably all of $R^1$ to $R^{22}$ represent a hydrogen atom.

The alicyclic epoxy compound (A) can be produced by a hydrogenation reaction of, for example, a compound (unsaturated diepoxy compound) represented by the following formula (2):

[Formula 3]

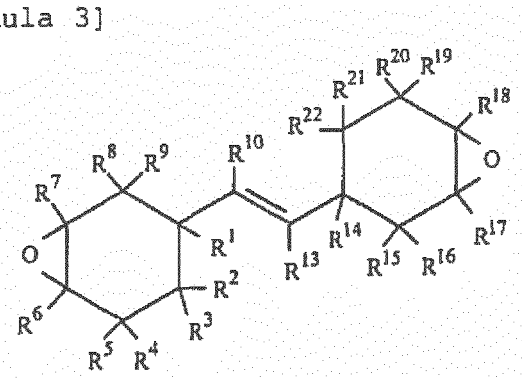

(2)

wherein $R^1$ to $R^{10}$ and $R^{13}$ to $R^{22}$ are the same as defined above.

The hydrogenation reaction is preferably carried out in the presence of a catalyst. As the catalyst, a metal catalyst (catalyst formed of a single metal or a metal compound) effective for a hydrogenation reaction is preferably used. Examples of the metal catalyst include a platinum catalyst, a palladium catalyst, a rhodium catalyst, an iridium catalyst, a ruthenium catalyst and a nickel catalyst. Of them, a palladium catalyst is preferable, a palladium carbon catalyst (active carbon is used as a carrier and palladium (0) is dispersed and carried on the carrier surface) and a palladium-fibroin composite, etc. are particularly preferable, and a palladium carbon-ethylene diamine complex, etc. is most preferable.

The amount of metal catalyst (in terms of metal) used, although it is not particularly limited, is preferably about 0.05 to 5 parts by weight relative to 100 parts by weight of a compound represented by the formula (2). The upper limit of amount of metal catalyst used is more preferably 2.5 parts by weight and particularly preferably 1 part by weight. The lower limit thereof is more preferably 0.1 parts by weight and particularly preferably 0.25 parts by weight. If the amount

of metal catalyst used is less than the above range, the yield of the alicyclic epoxy compound (A) tends to reduce. In contrast, the amount of metal catalyst used exceeding the above range may be economically unfavorable.

The hydrogenation reaction is preferably carried out in the presence of a solvent. As the solvent, any solvent may be used as long as it does not inhibit a reaction from proceeding. Examples of the solvent include, but are not particularly limited to, an alcohol (e.g., methanol, ethanol, propanol, isopropanol); and an ether (e.g., diethylether, tetrahydrofuran (THF)). The amount of solvent used, although it is not particularly limited, is preferably about 100 to 3000 parts by weight relative to 100 parts by weight of a compound represented by the formula (2) and more preferably 1000 to 2000 parts by weight.

In the hydrogenation reaction, the reaction pressure, although it is not particularly limited, is preferably normal pressure to 100 atm. (0.1 to 10 MPa) and more preferably normal pressure to 10 atm. (0.1 to 1 MPa). The hydrogenation reaction can be carried out in the presence of hydrogen (under a hydrogen atmosphere) or a hydrogen stream. In the gas phase of a reaction system, an inert gas such as nitrogen, argon and helium may be present other than hydrogen. To enhance gas-liquid contact, a hydrogen-containing gas may be blown in a liquid phase of the reaction system by way of a blowing pipe. The reaction temperature, although it is not particularly limited, is preferably about 10 to 50°C. The time for the reaction, although it is not particularly limited, is preferably about 5 to 100 hours. The hydrogenation reaction may be carried out, for example, in any one of the batch, semi-batch and continuous systems.

Owing to the hydrogenation reaction, the carbon-carbon double bond of a compound represented by the formula (2) is hydrogenated to produce a compound represented by the corresponding formula (1) (alicyclic epoxy compound (A); $R^{11}$ and $R^{12}$ in the formula (1) each represent a hydrogen atom).

After completion of the reaction, a reaction product can be separated and purified by a known or conventional separation and purification means such as filtration, concentration, distillation, extraction, crystallization, recrystallization, adsorption and column chromatography, or a combination of these.

Note that a compound represented by the formula (2) can be produced, for example, by the following method 1 or 2. In the following formula, $R^1$ to $R^{10}$ and $R^{13}$ to $R^{22}$, which may be the same or different, each represent a hydrogen atom, a methyl group or an ethyl group, as defined above.

1. A compound represented by the following formula (3) and a compound represented by the following formula (3') are subjected to a metathesis reaction (particularly, olefin metathesis reaction).

[Formula 4]

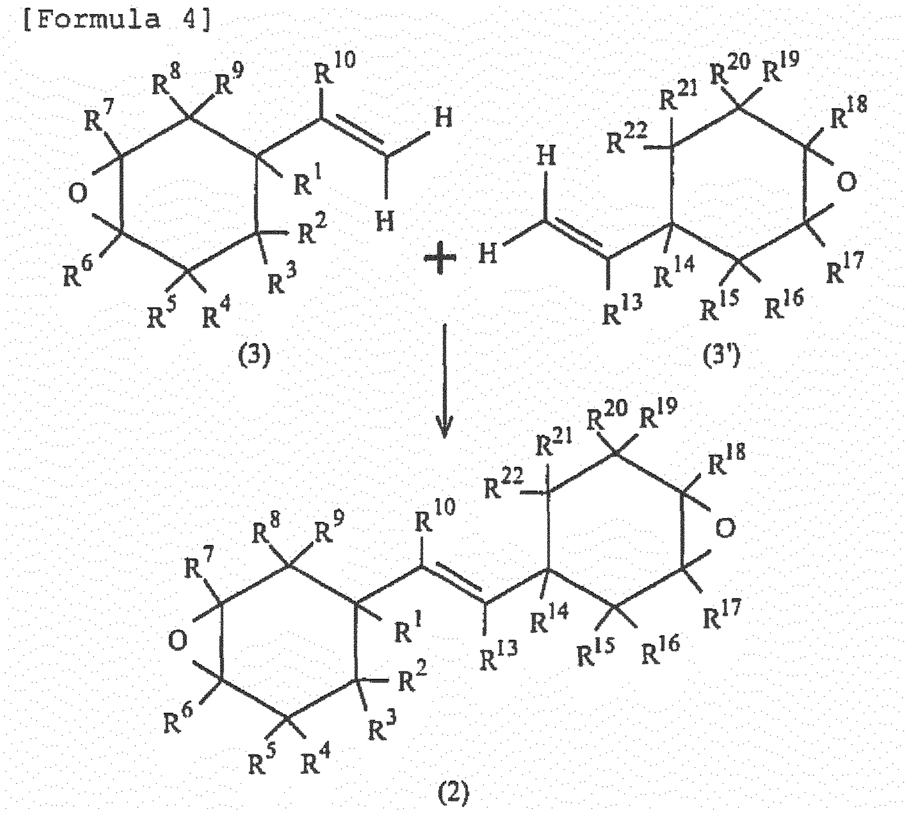

2. A compound represented by the following formula (4) and a compound represented by the following formula (4') are subjected to a metathesis reaction to obtain a compound represented by the following formula (5), and the

compound represented by the following formula (5) thus obtained is epoxidized.

[Formula 5]

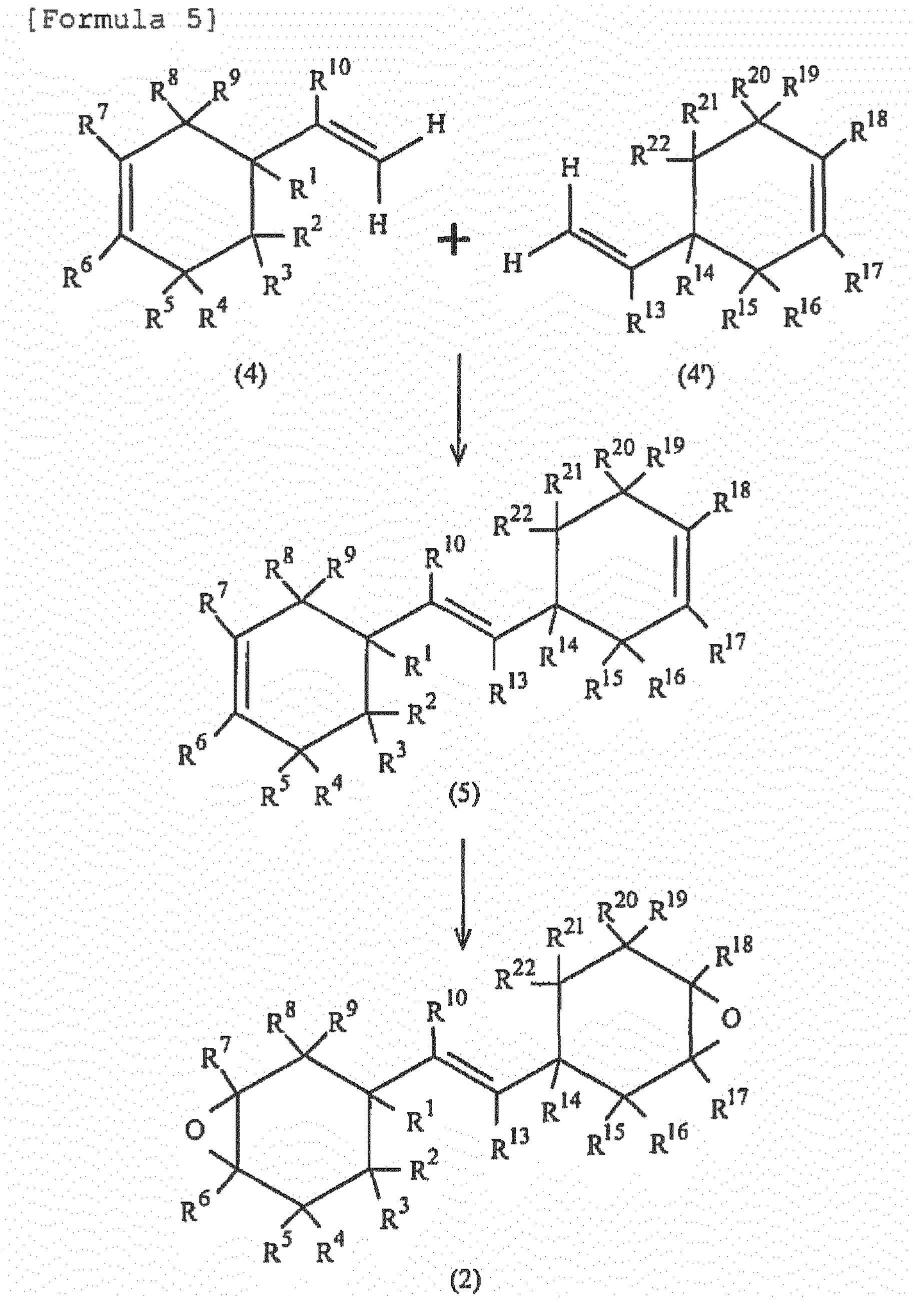

The metathesis reaction in the above method 1 or 2 is preferably carried out in the presence of a catalyst. As the catalyst, for example, a ruthenium complex, a tungsten compound, a molybdenum compound, a titanium compound and a vanadium compound are preferable. More specifically, the following commercially available products of a ruthenium carbene complex can be preferably used, which include Dichloro-(3-phenyl-1H-inden-1-ylidene)bis(tricyclohexylphosphine)ruthenium(II) (trade name, "Umicore M1"), Dichloro-(3-phenyl-1H-inden-1-ylidene)bis(isobutylphobane)ruthenium(II) (trade name, "Umicore $M1_1$"), [1,3-Bis(2,4,6-trimethylphenyl)-2-imidazolidinylidenejdichloro-(3-phenyl-1H-inden-1-ylidene)(tricyclohexylphosphine)ruthenium(II) (trade name, "Umicore M2"), [1,3-Bis(2,4,6-trimethylphenyl)-2-imidazolidinylidene]dichloro-(3-phenyl-1H-inden-1-ylidene)(pyridyl)ruthenium(II) (trade name, "Umicore $M3_1$"), [1,3-Bis(2,4,6-trimethylphenyl)-2-imidazolidinylidene]-[2-[[(4-methylphenyl)imino]methyl]-4-nitro-phenolyl]chloro-[3-phenyl-indenylidene]ruthenium(II) (trade name, "Umicore $M4_1$"), [1,3-Bis(2,4,6-trimethylphenyl)-2-imidazolidinylidene]-[2-[[(2-methylphenyl)imino]methyl]-phenolyl]chloro-(3-phenyl-indenylidene)ruthenium(II) (trade name, "Umicore $M4_2$"), [1,3-bis(2,4,6-trimethylphenyl)-2-imidazolidinylidene]dichloro[2-(1-methylacetoxy)phenyl]methyleneruthenium(II) (trade name, "Umicore $M5_1$" all in the above are manufactured by Umicore); Bis(tricyclohexylphosphine)benzylidine ruthenium

(IV) dichloridebenzylidene-bis(tricyclohexylphosphine)dichlororuthenium (trade name, "Grubbs Catalyst, 1st Generation"), (1,3-Bis(2,4,6-trimethylphenyl)-2-imidazolidinylidene)dichloro(phenyl-methylene)(tricyclohexylphosphine)ruthenium[1,3-bis-(2,4,6-trimethylphenyl)-2-imidazolidinylidene]dichloro(phenylmethylene)(tricyclohex ylphosphine)rutheniumbenzylidene[1,3-bis(2,4,6-trimethylphenyl)-2-imidazolidinylidene]dichloro(tricyclohexylphosphine)ruthe nium (trade name, "Grubbs Catalyst, 2nd Generation"), (Dichloro o-isopropoxyphenylmethylene)(tricyclohexylphosphine)rutheni um (II) (trade name, "Hoveyda-Grubbs Catalyst 1st Generation"), (1,3-Bis-(2,4,6-trimethylphenyl)-2-imidazolidinylidene)dichloro(o-isopropoxyphenylmethylene)ruthenium (trade name, "Hoveyda-Grubbs Catalyst 2nd Generation", all in the above are manufactured by Sigma-Aldrich); and Tricyclohexylphosphine[1,3-bis(2,4,6-trimethylphenyl)imidazol-2-ylidene][2-thienylmethylene]ruthenium(II) dichloride (trade name, "catMETium RF 2"), Tricyclohexylphosphine[4,5-dimethyl-1,3-bis(2,4,6-trimethylphenyl)imidazol-2-ylidene][2-thienylmethylene]ruthenium(II) dichloride (trade name, "catMETium RF 3"), and Tricyclohexylphosphine[2,4-dihydro-2,4,5-triphenyl-3H-1,2,4-triazol-3-ylidene][2-thienylmethylene]ruthenium(II) dichloride (trade name, "catMETium RF 4", all in the above are manufactured by Evonik). As the catalyst, a combination of a transition metal compound of the 4 to 8th family in the periodic table such as tungsten chloride, tungsten oxide chloride, molybdenum chloride, titanium chloride and vanadium chloride, an organic aluminum such as triethyl aluminum and an organic tin such as tetramethyl tin, can be used. Other than this, a molybdenum carbene complex such as 2,6-Diisopropylphenylimido Neophylidenemolybdenum (VI) Bis(hexafluoro-t-butoxide)(manufactured by STREM) can be used.

In the metathesis reaction, the amount of catalyst used, although it is not particularly limited, is preferably about 0.00001 to 0.01 moles relative to one mole of the total amount of a compound represented by the formula (3) and a compound represented by the formula (3') [or the total amount of a compound represented by the formula (4) and a compound represented by the formula (4')]. The upper limit of amount of catalyst used is more preferably 0.005 moles and particularly preferably 0.003 moles. The lower limit thereof is more preferably 0.00002 moles and particularly preferably 0.00005 moles. If the amount of catalyst used is less than the above range, the yield of a compound represented by the formula (2) tends to reduce. In contrast, the amount of catalyst used exceeding the above range may be economically unfavorable.

The metathesis reaction may be carried out in the presence of a solvent. As the solvent, any solvent may be used as long as it does not inhibit a reaction from proceeding. Examples thereof include, but are not particularly limited to, an aliphatic hydrocarbon such as hexane and octane; an aromatic hydrocarbon such as toluene and xylene; an alicyclic hydrocarbon such as cyclohexane; a halogenated hydrocarbon such as methylene chloride, and 1,2-dichloroethane; an ester such as ethyl acetate; an ether such as dioxane; and an aprotic polar solvent such as N,N-dimethyl formamide. The solvents can be used alone or in combination of two or more.

The amount of solvent used, although it is not particularly limited, is preferably 0 to 2000 parts by weight relative to 100 parts by weight of the total amount of a compound represented by the formula (3) and a compound represented by the formula (3') [or the total amount of a compound represented by the formula (4) and a compound represented by the formula (4')], and more preferably 0 to 500 parts by weight.

In the metathesis reaction, the reaction temperature, which can be appropriately selected depending upon e.g., the type of reaction components and catalyst and is not particularly limited; is preferably 10 to 100°C, more preferably 20 to 80°C and further preferably 30 to 50°C. The time for the reaction, although it is not particularly limited, is preferably 5 to 100 hours and more preferably 12 to 60 hours. The reaction may be carried out under normal pressure, under reduced pressure or under pressure. The atmosphere of the reaction is not particularly limited as long as it does not inhibit a reaction. For example, either a nitrogen atmosphere or an argon atmosphere may be used. The metathesis reaction may be carried out, for example, in any one of the batch, semi-batch and continuous systems.

After completion of the reaction, a reaction product can be separated and purified by a known or conventional separation and purification means such as filtration, concentration, distillation, extraction, crystallization, recrystallization, adsorption and column chromatography, or a combination of these.

When a compound represented by the formula (3) and a compound represented by the formula (3') are subjected to a metathesis reaction, bonds between the above two epoxy compounds are exchanged to produce the compound represented by the corresponding formula (2). Furthermore, when a compound represented by the formula (4) and a compound represented by the formula (4') are subjected to a metathesis reaction, bonds between the above two compounds are exchanged to obtain the compound represented by the corresponding formula (5).

The compound represented by the formula (5) and obtained by the above metathesis reaction is further epoxidized to obtain the compound represented by the corresponding formula (2).

The epoxidation reaction is preferably carried out in the presence of an epoxidizing agent. Examples of the epoxidizing agent include a peracid and hydrogen peroxide. Of them, a peracid is preferably used.

Examples of the peracid include performic acid, peracetic acid, perbenzoic acid, metachloroperbenzoic acid and trifluoroperacetic acid. Of them, use of metachloroperbenzoic acid as an epoxidizing agent is preferable in view of availability. Note that compounds can be used alone or in combination of two or more, as the epoxidizing agent.

The amount of epoxidizing agent used, which can be appropriately controlled depending upon e.g., the type

of epoxidizing agent to be used and the type of compound represented by the formula (5) and is not particularly limited, is preferably 1.6 to 2.4 moles relative to one mole of a compound represented by the formula (5) and more preferably 1.8 to 2.2 moles.

The epoxidation reaction of a compound represented by the formula (5) may be carried out in the presence of a solvent. As the solvent, any solvent may be used as long as it does not inhibit a reaction from proceeding. Examples thereof include, but are not particularly limited to, an aromatic compound such as toluene and benzene; an aliphatic hydrocarbon such as hexane and cyclohexane; and an ester such as ethyl acetate.

In the epoxidation reaction, the reaction temperature, although it is not particularly limited, is preferably 0 to 60°C, more preferably 0 to 40°C, particularly preferably 0 to 20°C and most preferably 0 to 10°C. If the reaction temperature is less than 0°C, the reaction rate may decrease. In contrast, if the reaction temperature exceeds 60°C, decomposition of an epoxidizing agent may occur. The above epoxidation reaction can be allowed to proceed by stirring a mixture containing at least, for example, a compound represented by the formula (5) and an epoxidizing agent, for about 1 to 5 hours.

The epoxidation reaction can be terminated by quenching the epoxidizing agent by adding a reducing agent such as sodium sulfite, potassium sulfite, ammonium sulfite, sodium hydrogen sulfite, potassium hydrogen sulfite, ammonium hydrogen sulfite, sodium thiosulfate and potassium thiosulfate, to the reaction system. After completion of the reaction, a reaction product can be separated and purified by a known or conventional separation and purification means such as filtration, concentration, distillation, extraction, crystallization, recrystallization, adsorption and column chromatography or a combination of these.

The alicyclic epoxy compound (A) can also be produced by epoxidizing a compound (diolefin compound) represented by the following formula (6):

[Formula 6]

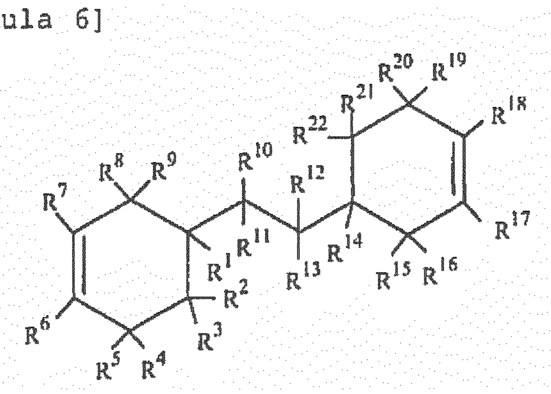

(6)

wherein $R^1$ to $R^{22}$ are the same as defined above.

Epoxidation of a compound represented by the formula (6) can be carried out, for example, by use of an epoxidizing agent, in the same manner as in the epoxidation of the aforementioned compound represented by the formula (5).

As the epoxidizing agent, for example, a peroxide such as performic acid, peracetic acid, perbenzoic acid, metachloroperbenzoic acid and trifluoroperacetic acid, and hydrogen peroxide can be used. Of them, metachloroperbenzoic acid is preferable in view of availability.

The amount of epoxidizing agent used, although it is not particularly limited, is preferably not more than 3.0 moles, relative to one mole of a compound represented by the formula (6), and more preferably 2.2 to 2.6 moles.

The epoxidation reaction of a compound represented by the formula (6) may be carried out in the presence of a solvent. As the solvent, any solvent may be used as long as it does not inhibit the reaction from proceeding. Examples thereof include, but are not particularly limited to, an aromatic compound such as toluene and benzene; an aliphatic hydrocarbon such as hexane and cyclohexane; and an ester such as ethyl acetate. The amount of solvent used, although it is not particularly limited, is preferably about 3 to 10 times as large as the weight of a compound represented by the formula (6).

In the above epoxidation reaction, the reaction temperature, although it is not particularly limited, is preferably 0 to 60°C, more preferably 10 to 50°C and particularly preferably 20 to 40°C. If the reaction temperature is less than 0°C, the reaction rate may decrease. In contrast, if the reaction temperature exceeds 60°C, decomposition of an epoxidizing agent may occur. The epoxidation reaction is allowed to proceed by stirring a mixture containing at least, for example, a compound represented by the formula (6) and an epoxidizing agent, for about 1 to 5 hours.

The epoxidation reaction can be terminated by quenching the epoxidizing agent by adding a reducing agent such as sodium sulfite, potassium sulfite, ammonium sulfite, sodium hydrogen sulfite, potassium hydrogen sulfite, ammonium hydrogen sulfite, sodium thiosulfate and potassium thiosulfate to the reaction system. After completion of the reaction, a reaction product can be separated and purified by a known or conventional separation and purification means such as filtration, concentration, distillation, extraction, crystallization, recrystallization, adsorption and column chromatography or a combination of these.

Note that a compound (diolefin compound) represented by the following formula (6) can be produced, for example, by reacting a compound represented by the following formula (8):

[Formula 7]

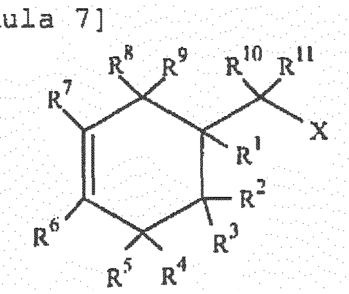

(8)

wherein $R^1$ to $R^{11}$, which may be the same or different, each represent a hydrogen atom, a methyl group or an ethyl group, as defined above; and X represents a chlorine atom, a bromine atom, an iodine atom, a benzenesulfonyloxy group, a p-toluenesulfonyloxy group, a methanesulfonyloxy group or a trifluoromethanesulfonyloxy group,
and a compound represented by the following formula (7):

[Formula 8]

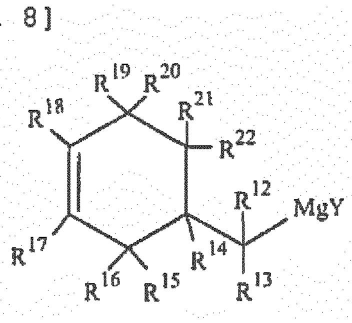

(7)

wherein $R^{12}$ to $R^{22}$, which may be the same or different, each represent a hydrogen atom, a methyl group or an ethyl group, as defined above; and Y represents a chlorine atom, a bromine atom, or an iodine atom.

The above reaction is preferably carried out in the presence of a catalyst. Examples of the catalyst include an iron catalyst, a copper catalyst and a nickel catalyst. Of them, an iron catalyst or a copper catalyst is preferable.

Examples of the iron catalyst include an organic chelate compound between e.g., iron (III) and each of acetyl acetone (= acac) and dibenzoyl methane (= DBM) [more specifically, e.g., $Fe(acac)_3$, $Fe(DBM)_3$] and halogenated iron such as $FeCl_3$. These can be used alone or in combination of two or more.

The amount of iron catalyst used, although it is not particularly limited, is preferably 0.001 to 0.3 moles relative to one mole of a compound represented by the formula (8), more preferably 0.005 to 0.2 moles and particularly preferably 0.01 to 0.1 moles. If an iron catalyst is used within the above range, a compound represented by the formula (6) can be produced in excellent yield.

When the above reaction is carried out in the presence of an iron catalyst, a tertiary amide including a tertiary carboxylic amide such as N-methylpyrrolidinone (NMP) and a tertiary phosphoric amide such as hexamethylphosphoric triamide (HMPA) is preferably used together with the iron catalyst, because the yield can be significantly increased. The amount of tertiary amide used, although it is not particularly limited, is preferably 0.1 to 5 moles relative to one mole of a compound represented by the formula (8), more preferably 0.5 to 3 moles and particularly preferably 0.5 to 2 moles.

Examples of the copper catalyst include halogenated copper such as $CuCl_2$ and copper sulfonate such as copper (I) trifluoro methanesulfonate (Cu(OTf)). These can be used alone or in combination of two or more.

The amount of copper catalyst used, although it is not particularly limited, is preferably 0.005 to 0.2 moles relative to one mole of a compound represented by the formula (8), more preferably 0.005 to 0.15 moles and particularly preferably 0.01 to 0.1 moles. If a copper catalyst is used within the above range, a compound represented by the formula (6) can be produced in excellent yield.

If the above reaction is carried out in the presence of a copper catalyst, a compound (alkyne) represented by

the following formula (9) is preferably used together with a copper catalyst because the yield can be significantly increased. In the formula (9), $R^{23}$ and $R^{24}$, which may be the same or different, each represent a linear aliphatic hydrocarbon group, a cyclic aliphatic hydrocarbon group or an aromatic hydrocarbon group.

[Formula 9]

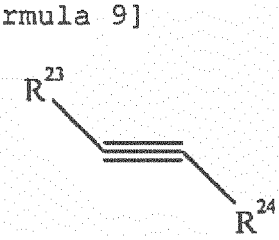

(9)

Examples of the linear aliphatic hydrocarbon group represented by $R^{23}$ and $R^{24}$ include an alkyl group having about 1 to 20 carbon atoms (preferably 1 to 10, more preferably 1 to 3) such as a methyl group, an ethyl group, a propyl group, an isopropyl group, an n-butyl group, an isobutyl group, an s-butyl group, a t-butyl group, a pentyl group, a hexyl group, a decyl group and a dodecyl group; an alkenyl group having about 2 to 20 carbon atoms (preferably 2 to 10, more preferably 2 or 3) such as a vinyl group, an allyl group and a 1-butenyl group; and an alkynyl group having about 2 to 20 carbon atoms (preferably 2 to 10, more preferably 2 or 3) such as an ethynyl group and a propynyl group.
Examples of the cyclic aliphatic hydrocarbon group represented by $R^{23}$ and $R^{24}$ include a cycloalkyl group having about 3 to 20 members (preferably 3 to 15 members, more preferably 5 to 8 members) such as a cyclopropyl group, a cyclobutyl group, a cyclopentyl group, a cyclohexyl group and a cyclooctyl group; a cycloalkenyl group having about 3 to 20 members (preferably 3 to 15 members, more preferably 5 to 8 members) such as a cyclopentenyl group and a cyclohexenyl group; a crosslinked cyclic hydrocarbon group such as a perhydronaphthalen-1-yl group, a norbornyl group, an adamantyl group and a tetracyclo[$4.4.0.1^{2,5}.1^{7,10}$]dodecan-3-yl group.
Examples of the aromatic hydrocarbon group represented by $R^{23}$ and $R^{24}$ include an aromatic hydrocarbon group having about 6 to 14 carbon atoms (preferably 6 to 10) such as a phenyl group, a p-methylphenyl group and a naphthyl group.
Of them, as the compound represented by the formula (9), a compound wherein one of $R^{23}$ and $R^{24}$ is an aromatic hydrocarbon group, is preferable, particularly, 1-phenylpropyne, 1-phenylbutyne, 1-(p-methylphenyl)propyne and 1-(p-methylphenyl)butyne are preferable.
The amount of compound represented by the formula (9) used, although it is not particularly limited, is preferably 0.01 to 0.4 moles relative to one mole of a compound represented by the formula (8), more preferably 0.01 to 0.3 moles and particularly preferably 0.02 to 0.2 moles. If the amount of compound represented by the formula (9) used is less than the above range, the reaction is terminated and the yield tends to reduce. In contrast, the amount of compound represented by the formula (9) used exceeds the above range, the purity of the resultant product tends to reduce.
The above reaction can be carried out in the presence or absence of a solvent. As the solvent, any solvent may be used as long as it does not inhibit a reaction from proceeding. Examples thereof include, but are not particularly limited to, a hydrocarbon (e.g., hexane, cyclohexane, heptane, toluene); and an ether (e.g., diethylether, tetrahydrofuran (THF)). The amount of solvent used, although it is not particularly limited, is preferably about 1 to 10 times as large as the weight of a compound represented by the formula (8).
The above reaction may be carried out under normal pressure, under reduced pressure or under pressure. The reaction atmosphere is not particularly limited as long as it does not inhibit the reaction. For example, an air atmosphere, a nitrogen atmosphere or an argon atmosphere may be used. The reaction temperature, although it is not particularly limited, is preferably 20 to 100°C. The time for the reaction, although it is not particularly limited, is preferably 2 to 10 hours. The reaction may be carried out, for example, in any one of the batch, semi-batch and continuous systems.
After completion of the reaction, a reaction product can be separated and purified by a known or conventional separation and purification means such as filtration, concentration, distillation, extraction, crystallization, recrystallization, adsorption and column chromatography, or a combination of these.
Note that, for example, a compound represented by the above formula (8) wherein $R^1$ to $R^{11}$ all represent a hydrogen atom, can be obtained by reacting, for example, 1,2,5,6-tetrahydrobenzyl alcohol and HX (X is the same as defined above).
The reaction between 1,2,5,6-tetrahydrobenzyl alcohol and HX is preferably carried out in the presence of a solvent. As the solvent, any solvent may be used as long as it does not inhibit a reaction from proceeding. Examples thereof include, but are not particularly limited to, a hydrocarbon (e.g., hexane, cyclohexane, heptane, toluene); an ether (e.g., diethylether, tetrahydrofuran (THF)). The amount of solvent used, although it is not particularly limited, is preferably about 1 to 10 times as large as the weight of 1,2,5,6-tetrahydrobenzyl alcohol.
The reaction between 1,2,5,6-tetrahydrobenzyl alcohol and HX may be carried out under normal pressure,

under reduced pressure or under pressure. The reaction atmosphere is not particularly limited as long as it does not inhibit the reaction. For example, an air atmosphere, a nitrogen atmosphere or an argon atmosphere may be used. The reaction temperature, although it is not particularly limited, is preferably about 20 to 130°C. The time for the reaction, although it is not particularly limited, is preferably about 1 to 50 hours. The reaction may be carried out, for example, in any one of the batch, semi-batch and continuous systems.

A compound (Grignard reagent) represented by the above formula (7) can be obtained, for example, by reacting a compound represented by the formula (8) with magnesium and iodine ($I_2$).

The reaction of a compound represented by the formula (8) with magnesium and iodine ($I_2$) is preferably carried out in the presence of a solvent. As the solvent, any solvent may be used as long as it does not inhibit a reaction from proceeding. Examples thereof include, but are not particularly limited to, a hydrocarbon (e.g., hexane, heptane, toluene); and an ether (e.g., diethylether, tetrahydrofuran (THF)). The amount of solvent used, although it is not particularly limited, is preferably about 2 to 10 times as large as the weight of a compound represented by the formula (8).

The reaction of a compound represented by the formula (8) with magnesium and iodine ($I_2$) may be carried out under normal pressure, under reduced pressure or under pressure. The reaction atmosphere is not particularly limited as long as it does not inhibit the reaction. For example, an air atmosphere, a nitrogen atmosphere or an argon atmosphere may be used. The reaction temperature, although it is not particularly limited, is preferably about 10 to 100°C. The time for the reaction, although it is not particularly limited, is preferably about 1 to 3 hours. The reaction may be carried out, for example, in any one of the batch, semi-batch and continuous systems.

The compound (alicyclic epoxy compound (A)) represented by the formula (1) obtained by any one of the above methods and serving as an industrial product, has an extremely low content of a regioisomer (a structure isomer different in position of an epoxy group). The content of a regioisomer is, for example, not more than 5% and preferably not more than 1%. This is presumed that neither one of the aforementioned methods include a reaction which causes dislocation of a carbon-carbon unsaturated double bond, which is a structure of a precursor of an epoxy group.

In the curable epoxy resin composition of the present invention, compounds can be used alone or in combination of two or more, as the alicyclic epoxy compound (A).

In the curable epoxy resin composition of the present invention, the content (blending quantity; if two or more epoxy compounds are contained, the total amount of the compounds is referred to) of the alicyclic epoxy compound (A), although it is not particularly limited, is preferably 0.1 wt% or more (e.g., 0.1 wt% or more, less than 100 wt%) relative to the curable epoxy resin composition (100 wt%), more preferably 1 wt% or more, further preferably 5 to 90 wt%, particularly preferably 10 wt% or more, and most preferably 15 to 80 wt%. If the content of the alicyclic epoxy compound (A) is outside the above range, the heat resistance and transparency of a cured product may be insufficient.

The content (blending quantity) of the alicyclic epoxy compound (A) relative to the total amount of cationic curable compound (100 wt%; the total amount of alicyclic epoxy compound (A) and the other cationic curable compound (later described)) comprised in the curable epoxy resin composition, although it is not particularly limited, is preferably 1 wt% or more (e.g., 1 to 100 wt%), more preferably 10 wt% or more, further preferably 20 wt% or more, and particularly preferably 50 wt% or more. If the content of an alicyclic epoxy compound (A) is less than 1 wt%, the cure rate of the curable epoxy resin composition as well as the heat resistance and transparency of a cured product may be insufficient.

[Curing agent (B)]

In the curable epoxy resin composition of the present invention, the curing agent (B) is a compound, which plays a role of curing a curable epoxy resin composition by reacting with e.g., a cationic curable compound such as an alicyclic epoxy compound (A). As the curing agent (B), a curing agent known or conventionally used as a curing agent for an epoxy resin can be used. Examples thereof include, but are not particularly limited to, an acid anhydride (acid anhydride curing agent), an amine (amine curing agent), a polyamide resin, an imidazole (imidazole curing agent), a polymercaptan (polymercaptan curing agent), a phenol (phenol curing agent), a polycarboxylic acid, a dicyandiamide and an organic acid hydrazide.

As the acid anhydride (acid anhydride curing agent) serving as the curing agent (B), a known or conventional acid anhydride (acid anhydride curing agent) can be used. Examples thereof include, but are not particularly limited to, a methyl tetrahydrophthalic anhydride (e.g., 4-methyl-tetrahydrophthalic anhydride, 3-methyl-tetrahydrophthalic anhydride), a methylhexahydrophthalic anhydride (e.g., 4-methylhexahydrophthalic anhydride, 3-methylhexahydrophthalic anhydride), dodecenyl succinic anhydride, methyl endomethylene tetrahydrophthalic anhydride, phthalic anhydride, maleic anhydride, tetrahydrophthalic anhydride, hexahydrophthalic anhydride, methyl cyclohexene dicarboxylic acid anhydride, pyromellitic anhydride, trimellitic anhydride, benzophenonetetracarboxylic anhydrides, nadic acid anhydride, methyl nadic acid anhydride, hydrogenated methyl nadic acid anhydride, 4-(4-methyl-3-pentenyl) tetrahydrophthalic anhydride, succinic anhydride, adipic anhydride, sebacic anhydride, dodecanedioic acid anhydride, methyl cyclohexene tetracarboxylic anhydride, a vinyl ether-maleic anhydride copolymer and an alkyl styrene-maleic anhydride copolymer. Of them, in view of handling, an acid anhydride present in a liquid state at 25°C [e.g., methyl tetrahydrophthalic anhydride,

methylhexahydrophthalic anhydride, dodecenyl succinic anhydride, methyl endomethylene tetrahydrophthalic anhydride] is preferable. Note that, as to an acid anhydride present in a solid state at 25°C, if it is dissolved, for example, in an acid anhydride present in a liquid state at 25°C to prepare a liquid mixture, handling as the curing agent (B) in the curable epoxy resin composition of the present invention tends to be improved. As the acid anhydride curing agent, an anhydride of a saturated monocyclic hydrocarbon dicarboxylic acid (including a compound having a ring to which a substituent such as an alkyl group is bound) is preferable in view of the heat resistance and transparency of a cured product.

As the amine (amine curing agent) serving as the curing agent (B), a known or conventional amine curing agent can be used. Examples thereof include, but not particularly limited to, an aliphatic polyamine such as ethylenediamine, diethylenetriamine, triethylenetetramine, tetraethylene pentamine, dipropylenediamine, diethylaminopropylamine and polypropylenetriamine; a alicyclic polyamine such as menthenediamine, isophoronediamine, bis(4-amino-3-methyldicyclohexyl)methane, diamino dicyclohexyl methane, bis(aminomethyl)cyclohexane, N-aminoethylpiperazine and 3,9-bis(3-aminopropyl)-3,4,8,10-tetraoxaspiro(5,5)undecane; a mononuclear polyamine such as m-phenylenediamine, p-phenylenediamine, tolylene-2,4-diamine, tolylene-2,6-diamine, mesitylene-2,4-diamine, 3,5-diethyl-tolylene-2,4-diamine and 3,5-diethyl-tolylene-2,6-diamine; and an aromatic polyamine such as biphenylene diamine, 4,4-diaminodiphenylmethane, 2,5-naphthylenediamine and 2,6-naphthylenediamine.

As the phenol (phenolic curing agent) serving as the curing agent (B), a known or conventional phenolic curing agent can be used. Examples thereof include, but are not particularly limited to, a Novolak phenol resin, a Novolak cresol resin, an aralkyl resin such as para-xylylene modified phenol resin, para-xylylene/meta-xylylene modified phenol resin, a terpene modified phenol resin, a dicyclopentadiene modified phenol resin and a triphenol propane.

Examples of the polyamide resin serving as the curing agent (B) include a polyamide resin having one or both of a primary amino group and a secondary amino group within a molecule.

As the imidazole (imidazole curing agent) serving as the curing agent (B), a known or conventional imidazole curing agent can be used. Examples thereof include, but are not particularly limited to, 2-methylimidazole, 2-ethyl-4-methylimidazole, 2-undecylimidazole, 2-heptadecylimidazole, 2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-undecylimidazolium trimellitate, 1-cyanoethyl-2-phenylimidazolium trimellitate, 2-methylimidazolium isocyanurate, 2-phenylimidazolium isocyanurate, 2,4-diamino-6-[2-methyl-imidazolyl-(1)1-ethyl-s-triazine and 2,4-diamino-6-[2-ethyl-4-methylimidazolyl-(1)]-ethyl-s-triazine.

Examples of the polymercaptan (polymercaptan curing agent) serving as the curing agent (B) include a liquid-state polymercaptan and a polysulfide resin.

Examples of the poly-carboxylic acid serving as the curing agent (B) include adipic acid, sebacic acid, terephthalic acid, trimellitic acid and a carboxyl group-containing polyester.

Of them, as the curing agent (B), an acid anhydride (acid anhydride curing agent) is preferable in view of the heat resistance and transparency of a cured product. Note that in the curable epoxy resin composition of the present invention, compounds can be used alone or in combination of two or more, as the curing agent (B). As the curing agent (B), a commercially available compound can be used. Examples include "RIKACID MH-700" and "RIKACID MH-700F" (trade names, manufactured by New Japan Chemical Co., Ltd.); and "HN-5500" (trade name, manufactured by Hitachi Chemical Co., Ltd.).

In the curable epoxy resin composition of the present invention, the content (blending quantity; if two or more epoxy compounds are contained, the total amount of the compounds is referred to) of the curing agent (B), although it is not particularly limited, is preferably 50 to 200 parts by weight relative to the total amount (100 parts by weight) of cationic curable compounds comprised in the curable epoxy resin composition, and more preferably 80 to 150 parts by weight. More specifically, the acid anhydride is preferably used in a ratio of 0.5 to 1.5 equivalents per epoxy group (one equivalent) in all compounds having an epoxy group in the curable epoxy resin composition of the present invention. If the content of the curing agent (B) is less than 50 parts by weight, curing becomes insufficient and the heat resistance or the toughness of a cured product tends to reduce. In contrast, if the content of the curing agent (B) exceeds 200 parts by weight, a cured product is stained and the hue may sometimes deteriorate.

[Curing accelerator (C)]

It is preferable that the curable epoxy resin composition of the present invention further comprise a curing accelerator (C). The curing accelerator (C) is a compound having a function of accelerating a rate of a reaction between a cationic curable compound (particularly, a compound having an epoxy group) and the curing agent (B). As the curing accelerator (C), a known or conventional curing accelerator can be used. Examples thereof include, but are not particularly limited to, 1,8-diazabicyclo[5.4.0]undecene-7 (DBU) or a salt thereof (e.g., a phenol salt, an octylate, p-toluenesulfonate, a formate, a tetraphenylborate); 1,5-diazabicyclo[4.3.0]nonene-5 (DBN) or a salt thereof (e.g., a phenol salt, octylate, p-toluenesulfonate, formate, tetraphenylborate); a tertiary amine such as benzyldimethylamine, 2,4,6-tris(dimethylaminomethyl)phenol and N,N-dimethylcyclohexylamine; an imidazole such as 2-ethyl-4-methylimidazole and 1-cyanoethyl-2-ethyl-4-methylimidazole; a phosphate ester; a phosphine such as triphenyl phosphine and tris(dimethoxy)phosphine; a phosphonium compound such as tetraphenylphosphonium tetra(p-tolyl)borate; an organometallic salt such as zinc octylate, tin octylate and zinc stearate; and a metal chelate such as aluminum acetylacetone complex. As the curing accelerator (C), compounds can be used alone or in combination of two or more.

As the curing accelerator (C), a commercially available product such as "U-CAT SA 506", "U-CAT SA 102", "U-CAT 5003", "U-CAT 18X" (trade names) and "U-CAT 12XD" (development product) (manufactured by San-Apro Ltd.); "TPP-K" and "TPP-MK" (trade names, manufactured by HOKKO CHEMICAL INDUSTRY CO., Ltd.); and "PX-4ET" (trade name, manufactured by Nippon Chemical Industrial Co., Ltd.) can be used.

In the curable epoxy resin composition, the content (blending quantity; if two or more epoxy compounds are contained, the total amount of the compounds is referred to) of the curing accelerator (C), although it is not particularly limited, is preferably 0.01 to 5 parts by weight relative to the total amount (100 parts by weight) of cationic curable compounds comprised in the curable epoxy resin composition, more preferably 0.03 to 3 parts by weight and further preferably 0.03 to 2 parts by weight. If the content of the curing accelerator (C) is less than 0.01 parts by weight, the curing acceleration effect can be sometimes insufficient. In contrast, if the content of the curing accelerator (C) exceeds 5 parts by weight, a cured product is stained and the hue may sometimes deteriorate.

[Other cationic curable compound]

The curable epoxy resin composition of the present invention may comprise another cationic curable compound (sometimes referred to as "the other cationic curable compound") except the alicyclic epoxy compound (A). Examples of the other cationic curable compound include an alicyclic epoxy compound except the alicyclic epoxy compound (A), an aromatic glycidyl ether epoxy compound, an aliphatic polyhydric alcohol polyglycidyl ether, an oxetane compound (oxetanyl compound) and a vinyl ether compound (compound having a vinyl ether group).

Specific examples of the alicyclic epoxy compound except the alicyclic epoxy compound (A) include (i) a compound except an alicyclic epoxy compound (A), having an epoxy group (alicyclic epoxy group) constituted of two adjacent carbon atoms of an alicyclic ring and an oxygen atom, (ii) a compound in which an epoxy group is directly bound to an alicyclic ring via a single bond and (iii) a compound having an alicyclic ring and a glycidyl group.

As the compound (i) except the alicyclic epoxy compound (A), having an epoxy group (alicyclic epoxy group) constituted of two adjacent carbon atoms of an alicyclic ring and an oxygen atom, a compound arbitrarily selected from known or conventional compounds can be used. As the alicyclic epoxy group, a cyclohexene oxide group is preferable.

As the compound (i) except the alicyclic epoxy compound (A), having an epoxy group constituted of two adjacent carbon atoms of an alicyclic ring and an oxygen atom, a compound having a cyclohexene oxide group is preferable, in view of transparency and heat resistance, and particularly, a compound (alicyclic epoxy compound) represented by the following formula (I) is preferable.

[Formula 10]

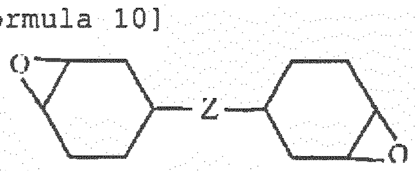

(I)

In the above formula (I), Z represents a single bond or a linking group (a divalent group having one or more atoms). Examples of the above linking group include a divalent hydrocarbon group (however, a group represented by the following formula (i) is not included), an alkenylene group whose carbon-carbon double bonds are wholly or partially epoxidized, a carbonyl group, an ether bond, an ester bond, a carbonate group, an amide group and a group formed by linking a plurality of these.

[Formula 11]

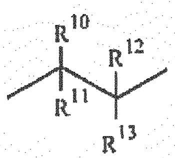

(i)

wherein $R^{10}$ to $R^{13}$, which may be the same or different, each represent a hydrogen atom, a methyl group or an ethyl

group, as defined above.

Examples of a compound represented by the above formula (I) wherein Z represents a single bond include 3,4,3',4'-diepoxybicyclohexane.

Examples of the above divalent hydrocarbon group include other than the group represented by the formula (i), a linear or branched alkylene group having 1 to 18 carbon atoms and a divalent alicyclic hydrocarbon group. Examples of the linear or branched alkylene group having 1 to 18 carbon atoms described above include a methylene group, a methylmethylene group, a dimethylmethylene group and a trimethylene group. Examples of the above divalent alicyclic hydrocarbon group include a divalent cycloalkylene group (including a cycloalkylidene group) such as 1,2-cyclopentylene group, a 1,3-cyclopentylene group, a cyclopentylidene group, a 1,2-cyclohexylene group, a 1,3-cyclohexylene group, a 1,4-cyclohexylene group and a cyclohexylidene group.

Examples of the alkenylene group in the alkenylene group whose carbon-carbon double bonds are wholly or partially epoxidized (sometimes referred to as an "epoxidized alkenylene group") include a linear or branched alkenylene group having 2 to 8 carbon atoms such as a vinylene group, a propenylene group, a 1-butenylene group, a 2-butenylene group, a butadienylene group, a pentenylene group, a hexenylene group, a heptenylene group and an octenylene group. As the epoxidized alkenylene group, particularly, an alkenylene group whose carbon-carbon double bonds are wholly epoxidized is preferable, and an alkenylene group having 2 to 4 carbon atoms, whose carbon-carbon double bonds are wholly epoxidized is more preferable.

As the linking group Z, particularly, a linking group having an oxygen atom is preferable. Specific examples thereof include -CO-, -O-CO-O-, -COO-, -O-,-CONH-, an epoxidized alkenylene group; a group formed by linking a plurality of these groups; and a group formed by linking one or two or more of these groups and one or two or more divalent hydrocarbon groups (however, a group represented by the formula (6) is not included). Examples of the divalent hydrocarbon group include the same as defined above.

Typical examples of an alicyclic epoxy compound represented by the above formula (I) include compounds represented by the following formulas (I-1) to (I-10), bis(3,4-epoxycyclohexylmethyl)ether, 1,2-epoxy-1,2-bis(3,4-epoxy cyclohexan-1-yl)ethane and 2,2-bis(3,4-epoxycyclohexan-1-yl) propane. Note that, in the following formulas (I-5) and (I-7), a and b each represent an integer of 1 to 30. In the following formula (I-5), R represents an alkylene group having 1 to 8 carbon atoms, more specifically, a linear or branched alkylene group such as a methylene group, an ethylene group, a propylene group, an isopropylene group, a butylene group, an isobutylene group, an s-butylene group, a pentylene group, a hexylene group, a heptylene group and an octylene group. Of them, linear or branched alkylene groups having 1 to 3 carbon atoms such as a methylene group, an ethylene group, a propylene group and an isopropylene group are preferable. In the following formulas (I-9) and (I-10), c1 to c6 each represent an integer of 1 to 30.

[Formula 12]

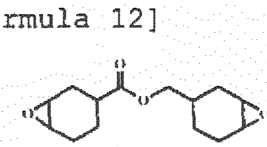
(I-1)

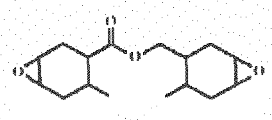
(I-2)

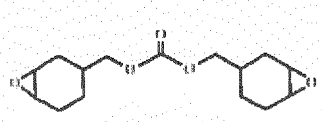
(I-3)

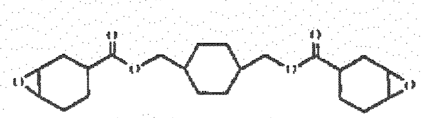
(I-4)

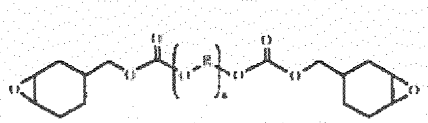
(I-5)

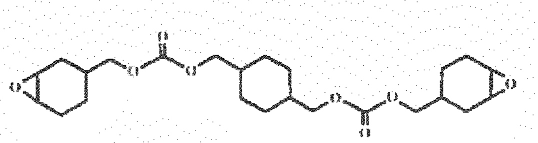
(I-6)

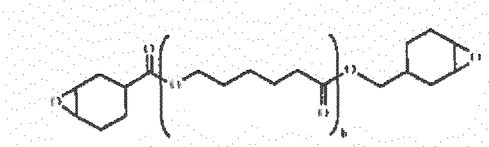
(I-7)

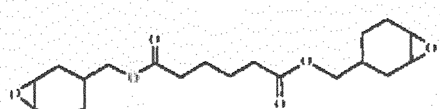
(I-8)

[Formula 13]

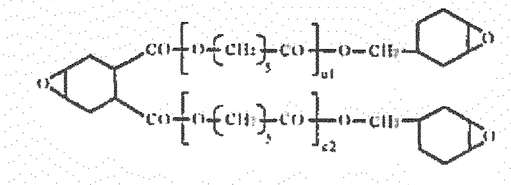

(I-9)

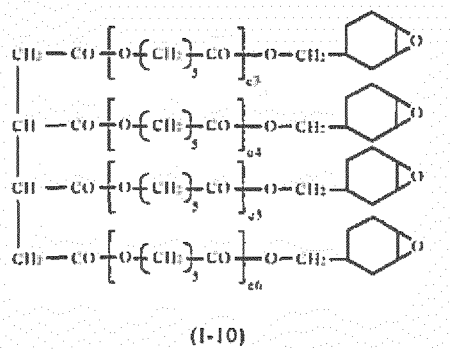

(I-10)

Examples of the compound (ii) in which an epoxy group is directly bound to an alicyclic ring via a single bond, include a compound represented by the following formula (II).

[Formula 14]

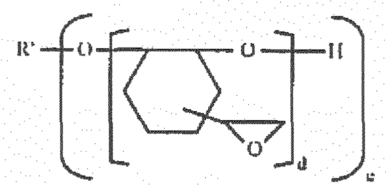

(II)

In the formula (II), R' represents a group obtained by removing e number of -OH from the structural formula of an e-valent alcohol; and d and e each represent a natural number. Examples of the e-valent alcohol represented by $[R'-(OH)_e]$ include a polyhydric alcohol such as 2,2-bis(hydroxymethyl)-1-butanol (alcohols having 1 to 15 carbon atoms). The reference symbol e preferably represents 1 to 6 and d preferably represents 1 to 30. If e is 2 or larger, the natural numbers represented by d within individual brackets (outer brackets) may be the same or different. Specific examples of the compound represented by the above formula (II) include 1,2-epoxy-4-(2-oxiranyl)cyclohexane adduct of 2,2-bis(hydroxymethyl)-1-butanol [e.g., "EHPE3150" (trade name, manufactured by Daicel Corporation)].

Examples of the compound (iii) having an alicyclic ring and a glycidyl group include a compound obtained by hydrogenating a bisphenol A epoxy compound (hydrogenated bisphenol A epoxy compound) such as 2,2-bis[4-(2,3-epoxypropoxy)cyclohexyl]propane and 2,2-bis[3,5-dimethyl-4-(2,3-epoxypropoxy)cyclohexyl]propane; a compound obtained by hydrogenating a bisphenol F epoxy compound (hydrogenated bisphenol F epoxy compound) such as bis[o,o-(2,3-epoxypropoxy)cyclohexyl]methane, bis[o,p-(2,3-epoxypropoxy)cyclohexyl]methane, bis[p,p-(2,3-epoxypropoxy)cyclohexyl]methane and bis[3,5-dimethyl-4-(2,3-epoxypropoxy)cyclohexyl]methane; a hydrogenated biphenol epoxy compound; a hydrogenated phenol Novolak epoxy compound; hydrogenated cresol Novolak epoxy compound; a hydrogenated cresol Novolak epoxy compound of bisphenol A; a hydrogenated naphthalene epoxy compound; and a hydrogenated aromatic glycidyl ether epoxy compound such as a hydrogenated epoxy compound obtained by hydrogenating an epoxy compound obtained from trisphenolmethane.

Examples of the aromatic glycidyl ether epoxy compound described above include a bisphenol A epoxy compound, a bisphenol F epoxy compound, a biphenol epoxy compound, a phenol Novolak epoxy compound, a cresol Novolak epoxy compound, a bisphenol A cresol Novolak epoxy compound, a naphthalene epoxy compound and an epoxy compound obtained from trisphenolmethane.

Examples of the aliphatic polyhydric alcohol polyglycidyl ether described above include a polyglycidyl ether of an aliphatic polyhydric alcohol such as glycerin, tetramethylene glycol, sorbitol, sorbitan, polyglycerin, pentaerythritol, tetramethylene glycol, hexamethylene glycol, trimethylolpropane, polyethylene glycol and polypropylene glycol.

Examples of the oxetane compound described above include 3,3-bis(vinyloxymethyl)oxetane, 3-ethyl-3-(2-ethylhexyloxymethyl)oxetane, 3-ethyl-3-(hydroxymethyl)oxetane, 3-ethyl-3-[(phenoxy)methyl]oxetane, 3-ethyl-3-(hexyloxymethyl)oxetane, 3-ethyl-3-(chloromethyl)oxetane, 3,3-bis(chloromethyl)oxetane, 1,4-bis[(3-ethyl-3-oxetanylmethoxy)methyl]benzene, bis{[1-ethyl(3-oxetanyl)]methyl}ether, 4,4'-bis[(3-ethyl-3-oxetanyl)methoxymethyl]bicyclohexyl, 1,4-bis[(3-ethyl-3-oxetanyl)methoxymethyl]cyclohexane, 1,4-bis{[(3-ethyl-3-oxetanyl)methoxy]methyl}benzene and 3-ethyl-3-{[(3-ethyloxetan-3-yl)methoxylmethyl}oxetane.

Examples of the vinyl ether compound described above include 2-hydroxyethyl vinyl ether, 3-hydroxypropyl

vinyl ether, 2-hydroxypropyl vinyl ether, 2-hydroxy-isopropyl vinyl ether, 4-hydroxybutyl vinyl ether, 3-hydroxybutyl vinyl ether, 2-hydroxybutyl vinyl ether, 3-hydroxyisobutyl vinyl ether, 2-hydroxyisobutyl vinyl ether, 1-methyl-3-hydroxypropyl vinyl ether, 1-methyl-2-hydroxypropyl vinyl ether, 1-hydroxymethylpropyl vinyl ether, 4-hydroxycyclohexyl vinyl ether, 1,6-hexanediol monovinyl ether, 1,6-hexanediol divinyl ether, 1,4-cyclohexanedimethanol monovinyl ether, 1,4-cyclohexane dimethanol divinyl ether, 1,3-cyclohexanedimethanol monovinyl ether, 1,3-cyclohexane dimethanol divinyl ether, 1,2-cyclohexanedimethanol monovinyl ether, 1,2-cyclohexane dimethanol divinyl ether, p-xylylene glycol monovinyl ether, p-xylylene glycol divinyl ether, m-xylylene glycol monovinyl ether, m-xylylene glycol divinyl ether, o-xylene glycol monovinyl ether, o-xylylene glycol divinyl ether, diethylene glycol monovinyl ether, diethylene glycol divinyl ether, triethylene glycol monovinyl ether, triethylene glycol divinyl ether, tetraethylene glycol monovinyl ether, tetraethylene glycol divinyl ether, penta-ethylene glycol monovinyl ether, penta-ethylene glycol divinyl ether, oligo-ethylene glycol monovinyl ether, oligo-ethylene glycol divinyl ether, polyethylene glycol monovinyl ether, polyethylene glycol divinyl ether, dipropylene glycol monovinyl ether, dipropylene glycol divinyl ether, tripropylene glycol monovinyl ether, tripropylene glycol divinyl ether, tetra-propylene glycol monovinyl ether, tetra-propylene glycol divinyl ether, penta-propylene glycol monovinyl ether, penta-propylene glycol divinyl ether, oligo-propylene glycol monovinyl ether, oligo-propylene glycol divinyl ether, polypropylene glycol monovinyl ether, polypropylene glycol divinyl ether, isosorbide divinyl ether, oxanorbornene divinyl ether, phenyl vinyl ether, n-butyl vinyl ether, octyl vinyl ether, cyclohexyl vinyl ether, hydroquinone divinyl ether and 1,4-butanediol divinyl ether.

In the curable epoxy resin composition of the present invention, as the other cationic curable compound, compounds can be used alone or in combination of two or more. As the other cationic curable compound, a commercially available compound can be used.

In the curable epoxy resin composition of the present invention, the content (blending quantity; if two or more epoxy compounds are contained, the total amount of the compounds is referred to) of the other cationic curable compound, although it is not particularly limited, is preferably 90 wt% or less (e.g., 0 to 90 wt%) relative to the total amount (100 wt%) of cationic curable compounds, and more preferably 80 wt% or less.

[Additive]

The curable epoxy resin composition of the present invention may comprise various additives other than the above components as long as the effects of the present invention are not impaired. If, e.g., a compound having a hydroxyl group such as ethylene glycol, diethylene glycol, propylene glycol and glycerin is added as the additive, reaction is allowed to proceed moderately. Other than this, as long as the effects of the present invention are not impaired, conventional additives such as a curing catalyst, a curing aid, an organosiloxane compound, a metal oxide particle, a rubber particle, silicone or fluorine based defoamer, a silane coupling agent, a filler, a plasticizer, a leveling agent, an antistatic agent, a release agent, a flame retardant, a colorant, an antioxidant, an ultraviolet absorber, an ion adsorbent, a pigment and a dye can be used.

The curable epoxy resin composition of the present invention, although it is not particularly limited, is prepared by stirring and mixing the aforementioned individual components while heating, if necessary. Note that the curable epoxy resin composition of the present invention may be a single liquid composition in which individual components are previously mixed and can be directly used as it is, or may be a multiple liquid composition (e.g., two liquid composition) consisting of two or more separate portions (each portion may be a mixture of two or more components), which is used by blending the portions in a predetermined ratio just before use. As the stirring and mixing method, although it is not particularly limited, for example, known or conventional stirring and mixing means including a mixer such as a dissolver and a homogenizer, a kneader, a roll, a beads mill and a planetary centrifugal mixer can be used. After stirring and mixing, defoaming may be carried out under vacuum.

<Cured product>

A cured product having a high glass-transition temperature and particularly having excellent balance between heat resistance and transparency can be obtained by curing the curable epoxy resin composition of the present invention (the cured product obtained by curing the curable epoxy resin composition of the present invention will be sometimes referred to as "the cured product of the present invention"). The heating temperature in curing (curing temperature), which is not particularly limited, is preferably 45 to 200°C, more preferably 50 to 190°C and further preferably 55 to 180°C. The time (curing time) for heating in curing, although it is not particularly limited, is preferably 30 to 600 minutes, more preferably 45 to 540 minutes and further preferably 60 to 480 minutes. If the curing temperature and curing time are lower than the lower limit value of the above range, curing becomes insufficient. Conversely, if the curing temperature and curing time are higher than the upper limit value of the above range, a resin component can be sometimes decomposed. Thus, both cases are not preferable. The curing conditions vary depending upon individual conditions, more specifically, can be appropriately controlled by reducing the curing time if the curing temperature is increased or by

increasing the curing time if the curing temperature is lowered. Curing can be made in a single step or in multiple steps of two or more steps.

The curable epoxy resin composition of the present invention can be applied to various uses including a coating agent, an ink, an adhesive, a sealant, a sealing agent, a resist, a composite material [for example, fiber reinforced plastic (FRP) such as CFRP and GFRP], a transparent substrate, a transparent film or sheet, an optical material (e.g., an optical lens), a stereolithographic material and an electronic material (e.g., an electronic paper, a touch panel, a solar cell substrate, an optical waveguide, a light guide plate, a holographic memory), a machine-part material, an electrical-part material, an auto-part material, a civil engineering and construction material, a molding material, a plastic forming material and a solvent.

Examples

The present invention will be more specifically described based on Examples; however the present invention is not limited by these Examples. Note that in the curable epoxy resin compositions shown in Table 1, the mixing ratios of individual components are expressed by parts by weight. In Table 1, the symbol "-" means that the component was not blended.

Production Example 1

[Production (1) of compound represented by the formula (1-1)]

(1. Production of compound represented by the formula (2-1))

Under a nitrogen atmosphere, 1.0 g (corresponding to 0.0025 moles relative to one mole of the following "Celloxide 2000") of [1,3-Bis(2,4,6-trimethylphenyl)-2-imidazolidinylidene]dichloro-(3-phenyl-1H-inden-1-ylidene)(tricyclohexylphosphine)ruthenium (II) (trade name, "Umicore M2", manufactured by Umicore) was dissolved in 53.3 g of toluene (excessively dewatered, manufactured by Wako Pure Chemical Industries Ltd.) and placed in a 200-mL three-neck flask.

While sparging the gas phase of the three-neck flask with nitrogen, 52.3 g of a compound, i.e., [1,2-epoxy-4-vinylcyclohexane, trade name, "Celloxide 2000", manufactured by Daicel Corporation] represented by the following formula (3-1) was placed by a syringe, and then, the reaction solution was stirred at 40°C for 48 hours. Thereafter, the reaction solution was concentrated and the resultant concentrated residue was purified by silica gel column chromatography to obtain 11.2 g of a compound (epoxy compound) represented by the following formula (2-1) as a brown solid substance. The yield of the compound represented by the formula (2-1) based on the compound represented by the formula (3-1) was 24.1%.

In $^1$H-NMR, it was confirmed that the number of peaks present at 54.8-5.8 corresponding to an olefin site of the compound represented by the formula (3-1) is decreased from two to one.

$^1$H-NMR(500MHz,$CDCl_3$,TMS based):δ5.2-5.0(m,2H),3.1-3.0(m,4H),2.2-0.9(m,14H)

The product obtained above was titrated by an acetic acid solution of hydrogen bromide. The resultant oxygen concentration of oxirane was 14.3 wt%, which corresponded to 99% of a theoretical value (14.5 wt%). The product obtained above was subjected to measurement using a thermogravimetric/differential thermal analyzer (TG/DTA) (trade name, "EXSTAR TG/DTA6200", manufactured by SII NanoTechnology Inc.), which was carried out by sparging with nitrogen at 200 mL/minute and while raising the temperature at a rate of 10°C /minute from 30°C to 400°C. The top temperature of an endothermic peak in melting thus measured was 50°C.

[Formula 15]

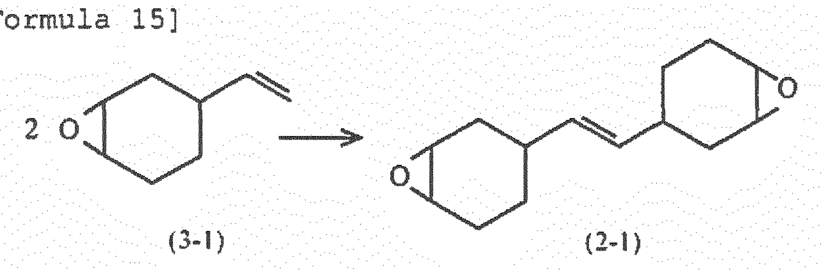

(3-1) (2-1)

(2. Production of compound represented by the formula (1-1))

A 1000-mL three-neck flask was charged with 2.0 g (Pd: 0.1 g) of 5% palladium carbon-ethylene diamine

complex (5% Pd/C(en), manufactured by Wako Pure Chemical Industries Ltd.) serving as a catalyst, 20.0 g of the compound obtained above and represented by the formula (2-1) and 363 g of THF. Thereafter, the resultant reaction solution was stirred under a hydrogen atmosphere at 30°C for 50 hours. Thereafter, the catalyst was removed by filtration. The resultant solution was concentrated and the resultant concentrated residue was purified by silica gel column chromatography to obtain 12.7 g of a compound, i.e., (1,2-bis(3,4-epoxycyclohexanyl)ethane) represented by the following formula (1-1) as a light yellow transparent liquid. The yield of the compound represented by the formula (1-1) based on the compound represented by the formula (2-1) was 63%.

In $^{1}$H-NMR, disappearance of a peak at δ5.2-5.0 corresponding to a double bond of the compound represented by the formula (2-1) was confirmed.

$^{1}$H-NMR(500MHz,$CDCl_3$,TMS based):δ3.2-3.1(m,4H),2.2-0.8(m, 18H)

The product obtained above was titrated by an acetic acid solution of hydrogen bromide. The resultant oxygen concentration of oxirane was 14.3 wt%, which corresponded to 99% of a theoretical value (14.4 wt%).

[Formula 16]

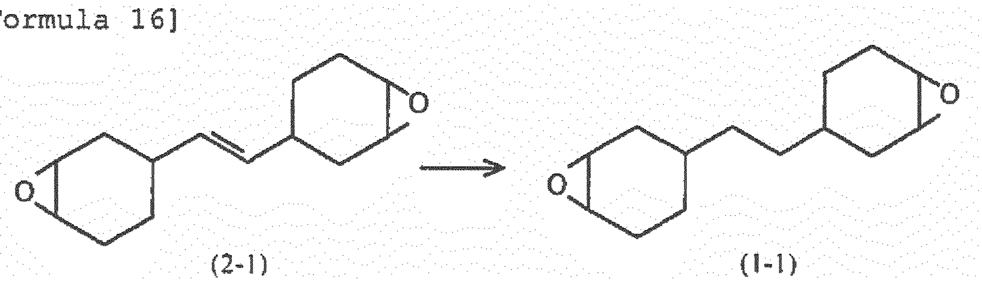

(2-1) (1-1)

Production Example 2

[Production (2) of compound represented by the formula (1-1)]

(1. Production of compound represented by the formula (5-1))

Under a nitrogen atmosphere, 0.08 g (corresponding to 0.0001 moles relative to one mole of the following 4-vinyl-1-cyclohexene) of [1,3-Bis(2,4,6-trimethylphenyl)-2-imidazolidinylidene]dichloro-(3-phenyl-1H-inden-1-ylidene)(tricyclohexylphosphine)ruthenium(II) (trade name, "Umicore M2", manufactured by Umicore) was dissolved in 90.0 g of toluene (excessively dewatered, manufactured by Wako Pure Chemical Industries Ltd.) and placed in a 300-mL three-neck flask.

While sparging the gas phase of the three-neck flask with nitrogen, 89.5 g of compound, i.e., (4-vinyl-1-cyclohexene) represented by the following formula (4-1) was placed by a syringe, and then the reaction solution was stirred at 40°C for 24 hours. Thereafter, the reaction solution was concentrated and the resultant concentrated residue was purified by single distillation under reduced pressure (0.9 kPa) to obtain 37.1 g of a compound (olefin compound) represented by the following formula (5-1) as a fraction at 125 to 126°C. The yield of the compound represented by the formula (5-1) based on the compound represented by the formula (4-1) was 47.4%.

In $^{1}$H-NMR, disappearance of a peak of a proton seen at δ5.1-4.9 corresponding to an end-terminal olefin of the compound represented by the formula (4-1) was confirmed.

$^{1}$H-NMR(500MHz,$CDGl_3$,TMS based):δ5.7-5.6(m,4H),5.5-5.2(m,2H),2.3-1.3(m,14H)

[Formula 17]

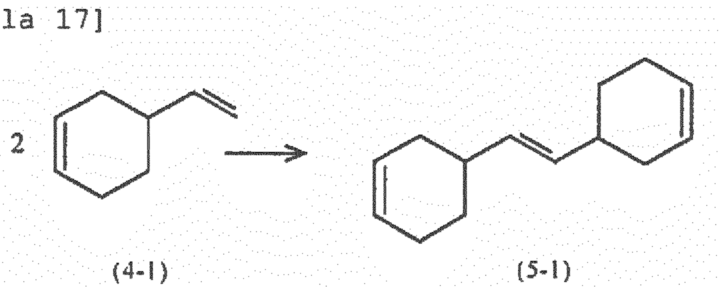

(4-1) (5-1)

(2. Production of compound represented by the formula (2-1))

The compound (1.0 g) represented by the formula (5-1) and obtained above was dissolved in 10 g of ethyl

acetate. While maintaining the temperature of the reaction solution at 0 to 5°C by cooling the reaction solution on ice, 2.6 g of hydrous metachloroperbenzoic acid (purity 70%) (corresponding to 2.0 moles relative to one mole of a compound represented by the formula (5-1)) was added to the reaction solution over 20 minutes. The reaction solution was stirred at 0 to 5°C for 2 hours. Subsequently, to the resultant reaction solution, 17 g of a 10 wt% aqueous sodium thiosulfate solution was added and stirred for 30 minutes. Thereafter, 10 g of toluene was added and the reaction solution was separated into layers. The resultant water layer was again extracted with 10 g of toluene.

The organic layers obtained were mixed and washed twice with 23 g of a 7 wt% aqueous sodium hydrogen carbonate solution and twice with 20 g of water. Thereafter, the organic layer was concentrated. The compound (epoxy compound) (0.21 g) represented by the following formula (2-1) was quantified from 1.08 g of the obtained concentrated residue in accordance with the gas chromatography internal standard method. The yield of the compound represented by the formula (2-1) based on the compound represented by the formula (5-1) was 18%.

[Formula 18]

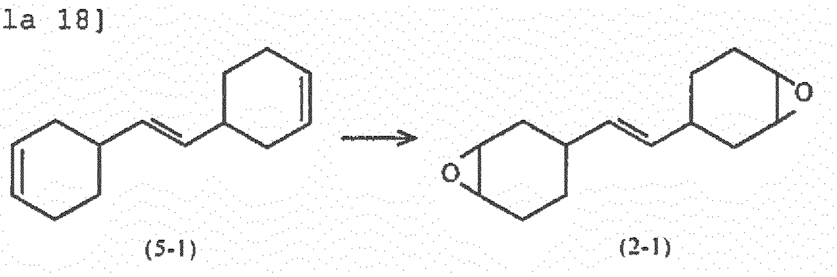

(5-1) (2-1)

(3. Production of compound represented by the formula (1-1))

A compound represented by the formula (1-1), i.e., (1,2-bis(3,4-epoxycyclohexanyl)ethane) was produced in the same manner as in Production Example 1, step 2., except that the compound represented by the formula (2-1) and obtained above was used as a raw material.

Production Example 3

[Production (3) of compound represented by the formula (1-1)]

(1. Production of Grignard reagent)

Magnesium (0.414 g, 0.0171 mol) and iodine (0.043 g, 0.17 mmol) were added to tetrahydrofuran (8.5 mL) and stirred under a nitrogen atmosphere at 40°C for 30 minutes. Thereafter, tetrahydrobenzyl chloride (2.23 g, 0.171 mol) represented by the following formula (10-1) was added dropwise to the reaction solution at 40°C over one hour. The reaction solution was then refluxed for 2 hours to prepare a Grignard reagent represented by the following formula (7-1).

[Formula 19]

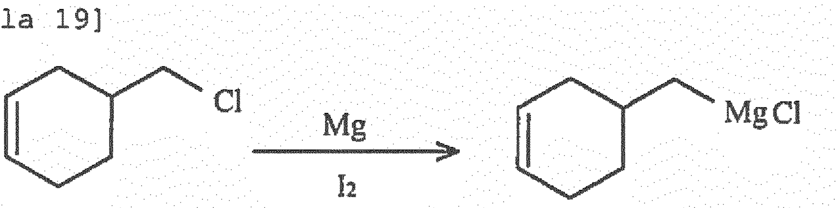


(10-1) (7-1)

(2. Production of compound represented by the formula (6-1))

To a solution mixture of tetrahydrobenzyl bromide (2.00 g, 0.0114 mol) represented by the following formula (8-1), 1-phenylpropyne (0.066 g, 0.571 mmol, corresponding to 0.05 times by mole as large as tetrahydrobenzyl bromide) and chloride copper (II) (0.031 g, 0.224 mmol, corresponding to 0.02 times by mole as large as tetrahydrobenzyl bromide), the Grignard reagent represented by the formula (7-1) and obtained above was added dropwise over 30 minutes under ice cooling. Subsequently, the temperature of the reaction solution was increased to 30°C. After the reaction solution was stirred for 3 hours, 10% hydrochloric acid was added to the reaction solution to terminate the reaction, which was allowed to separate into layers.

The organic layer was washed twice with water and then concentrated to obtain a crude product containing a compound (1,2-bis(cyclohexan-3-enyl)ethane) represented by the formula (6-1). The crude product was quantified by gas chromatography. As a result, the yield of the compound represented by the formula (6-1) based on the tetrahydrobenzyl bromide was 87%.
$^1$H-NMR($CDCl_3$):δ5.66(s,4H),2.12-2.03(m,6H),1.76-1.72(m,2H),1.67-1.61(m,2H),1.52-1.47(m,2H),1.31-1.17(m,6H)

[Formula 20]

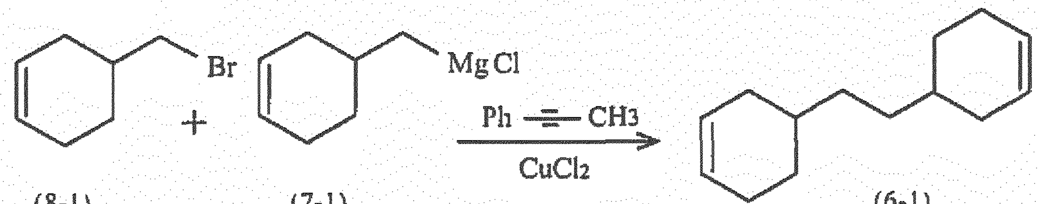

(8-1) (7-1) (6-1)

(3. Production of compound represented by the formula (1-1))

At 30°C, to a toluene (5.0 g) solution of 1.00 g of the compound (5.24 mmol) represented by the following formula (6-1), 3.16 g of hydrous metachloroperbenzoic acid (purity: 70%, 12.6 mmol, 2.4 times by mole as large as the compound represented by the formula (6-1)) was added in three parts. The reaction mixture was stirred at 30°C for 2 hours and then diluted with ethyl acetate. To this, an aqueous sodium thiosulfate solution was further added and stirred for 30 minutes.

The water layer was extracted with ethyl acetate. The resultant organic layer was washed twice with an aqueous sodium hydrogen carbonate solution, once with water and then concentrated. Thereafter, the residue concentrated was purified by silica gel column chromatography to obtain 0.689 g of a compound (1,2-bis(3,4-epoxycyclohexanyl)ethane) represented by the following formula (1-1) as a transparent liquid. The yield of the compound represented by the formula (1-1) based on the compound represented by the formula (6-1) was 59%. The product obtained above was titrated by an acetic acid solution of hydrogen bromide. The resultant oxygen concentration of oxirane was 13.9% (actual measurement value) and a calculated value (theoretical value) thereof was 14.4%.
$^1$H-NMR($CDCl_3$):δ3.15-3.11(m,4H),2.15-2.11(m,2H),2.03-1.98(m,2H),1.85-1.78(m,1H),1.73-1.67(m,1H),1.45-1.28(m,5H),1.13-1.07(m,6H),0.91-0.88(m,1H)

[Formula 21]

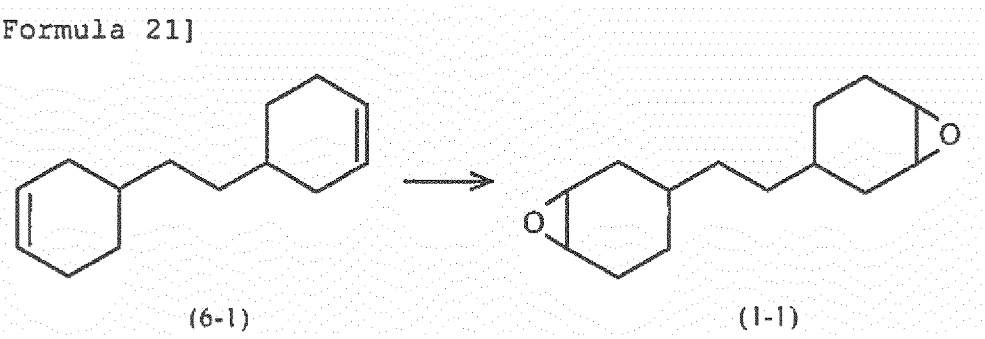
(6-1) (1-1)

Example 1

[Production of curable epoxy resin composition and cured product thereof]

A curing agent, "RIKACID MH-700F" (trade name, manufactured by New Japan Chemical Co., Ltd.), a curing accelerator, "U-CAT 12XD" (trade name, manufactured by San-Apro Ltd.), and a diluent, ethylene glycol (manufactured by Wako Pure Chemical Industries Ltd.) were blended in accordance with the mixing ratio (unit: parts by weight) shown in Table 1, homogeneously mixed and defoamed by use of a planetary centrifugal mixer (trade name "Awatori Neritaro AR-250", manufactured by THINKY) to obtain a composition (curing agent composition) containing the curing agent.

Subsequently, a compound represented by the formula (1-1), i.e., [1,2-bis(3,9-epoxycyclohexanyl)ethane] and obtained in Production Example 1 and the curing agent composition obtained above were blended in accordance with the mixing ratio (unit: parts by weight) shown in Table 1, homogeneously mixed and defoamed by use of a planetary

centrifugal mixer (trade name "Awatori Neritaro AR-250", manufactured by THINKY) to produce a curable epoxy resin composition.

Further, the curable epoxy resin composition obtained above was put in shaping dies (mold forms having a thickness of 4 mm, 3 mm and 0.5 mm), respectively placed in an oven for curing resin and heated in the curing conditions [100°C for 2 hours, subsequently 150°C for 4 hours] shown in Table 1. In this manner, the resin composition was cured to obtain a cured product.

Comparative Examples 1 to 3

[Production of curable epoxy resin composition and cured product thereof]

Curable epoxy resin compositions and cured products thereof were produced in the same manner as in Example 1 except that the type and amount of epoxy compound, the composition of curing agent composition and curing conditions were changed to those shown in Table 1.

<Evaluation>

The curable epoxy resin compositions and cured products obtained in Example and Comparative Examples were subjected to the following evaluation tests.

[Viscosity of curable epoxy resin composition (25°C)]

The viscosity of each of the curable epoxy resin compositions obtained in Example and Comparative Examples at 25°C was measured by a digital viscometer (model number "DVU-EII", manufactured by Tokimec, Inc.) in the conditions of rotor: standard 1°34' × R24, temperature: 25°C, rotation speed: 0.5 to 10 rpm.

[Pot life]

The curable epoxy resin compositions obtained in Example and Comparative Examples were heated at 50°C for 4 hours and the viscosity of them at 25°C after heating was measured by a digital viscometer (model number "DVU-EII" manufactured by Tokimec, Inc.) in the conditions of rotor: standard 1°34' × R24, temperature: 25°C, rotation speed: 0.5 to 10 rpm.

Note that when viscosity values before and after heating are compared, if the degree of increase in viscosity by heating is smaller, the pot life is meant be longer.

[Gelation time]

The curable epoxy resin compositions obtained in Example and Comparative Examples were measured by a gel time tester (manufactured by Yasuda Seiki Seisakusho Ltd.) in the conditions of rotor: diameter Φ5 × 110 mm, test tube: outer diameter Φ12 × 90 mm, oil: SRX 310 (heated to predetermined temperature (105°C) shown in Table 1). The time required for gelatinizing a sample (time at which a magnet immobilizing a rotor was removed due to a viscosity increase) was specified as gelation time.

[Heat resistance (TMA)]

The glass-transition temperature (Tg (TMA)) of each of the cured products obtained in Example and Comparative Examples was obtained by using a TMA measuring device ("TMA/SS100", manufactured by SII NanoTechnology Inc.) by the method in accordance with JIS K7197 as follows. The coefficient of thermal expansion was measured under a nitrogen atmosphere, at a temperature increase rate of 5°C/minute, in the measurement temperature range of 30 to 250°C. Thereafter, tangent lines were drawn at points of a curve before and after the glass-transition point. The intersection of these tangent lines is defined as the glass-transition temperature. The linear expansion coefficient of each of the cured products obtained in Examples and Comparative Examples was obtained by specifying the gradient of the linear line on the low-temperature side of the glass-transition temperature obtained above as $\alpha 1$, and the gradient of the linear line on the high-temperature side of the glass-transition temperature as $\alpha 2$.

[Heat resistance (DMA)]

From each of the cured products (thickness: 0.5 mm) obtained in Example and Comparative Examples, test

pieces having a size of a thickness of 0.5 mm × a width of 8 mm × a length of 40 mm were excised out. The peak top temperature (Tg (DMA-tanδ)) of a loss tangent (tanδ) of the test piece and the glass-transition onset temperature (Tg (DMA-E')) of a storage elastic modulus (E') were measured by using a dynamic viscoelasticity measuring device (DMA) (manufactured by Seiko Instruments Inc.). Note that measurement was carried out in the conditions: under a nitrogen stream, measurement temperature range: - 50 to 300°C, temperature increase rate: 3°C/minute and deformation mode: tensile mode.

[Mechanical characteristics (bending test)]

The cured products (obtained in Example and Comparative Examples) having a thickness of 4 mm × a width of 10 mm × a length of 80 mm were used as samples and subjected to a three-point bending test performed by use of a Tensilon universal testing machine (manufactured by Orientec Co., Ltd.) in the conditions of edge span: 67 mm, bending rate: 2 mm/minute. In this manner, bending strength, bending modulus and bending elongation of the cured products were measured.

[Transparency]

The light transmittance of each of the cured products obtained in Example and Comparative Examples (thickness: 3 mm) at a wavelength of 400 nm (transmittance (400 nm) [150°C × 0h]) was measured by use of a spectrophotometer (trade name, "UV-2450", manufactured by Shimadzu Corporation).

Subsequently, the cured product was heated at 150°C. The light transmittance 24 hours after initiation of heating at a wavelength of 400 nm (transmittance (400 nm) [150°C × 24h]) and the light transmittance 50 hours after initiation of heating at a wavelength of 400 nm (transmittance (400 nm) [150°C × 50h]) were measured in the same manner as above.

[Water absorption]

Each of the cured products (thickness: 3 mm) obtained in Example and Comparative Examples was dried in the conditions: 50°C and 24 hours and then cooled in a desiccator (containing silica gel), and the weight of the blank (M1) was measured. Thereafter, the cured product was allowed to stand still in water in the conditions: 23°C and 24 hours. After taken out, the cured product was wiped with gauze and the weight thereof was measured within one minute. This was regarded as the weight (M2) of the cured product after water absorption. The water absorption of the cured product was measured in accordance with the following expression.

$$\text{Water absorption } (\%) = \{(M2-M1)/M1\} \times 100$$

[Table 1]

(Table 1)

| | | | | Example 1 | Comparative Example 1 | Comparative Example 2 | Comparative Example 3 |
|---|---|---|---|---|---|---|---|
| Curable epoxy resin composition | Epoxy compound | Compound represented by the formula (1-1) | parts by weight | 100 | - | - | - |
| | | Celloxide 2021P | parts by weight | - | 100 | 50 | - |
| | | EHPE3150 | parts by weight | - | - | 50 | - |
| | | YD-128 | parts by weight | - | - | - | 100 |
| | Curing agent | RIKACID MH-700F | parts by weight | 126.1 | 112.8 | 97.2 | 79.3 |
| | Diluent | EG | parts by weight | 2.0 | 2.0 | 2.0 | 2.0 |
| | Curing accelerator | U-CAT 12XD | parts by weight | 0.5 | 0.5 | 0.5 | 0.5 |
| Curing conditions | | | | 100°C×2h 150°C×4h | 100°C×2h 150°C×2h | 100°C×2h 150°C×2h | 150°C×2h 150°C×2h |

(continued)

| | | | | Example 1 | Comparative Example 1 | Comparative Example 2 | Comparative Example 3 |
|---|---|---|---|---|---|---|---|
| Evaluation results | Viscosity | Viscosity (25°C) | mPa·s | 118 | 213 | 2613 | 2528 |
| | Pot life | Viscosity (25°C) 150°C×4h] | mPa·s | 335 | 319 | 25140 | 5606 |
| | Gelation time | Gelation time [150°C] | min | 6.9 | 7.7 | 5.2 | 6.4 |
| | Heat resistance (TMA) (5°C/min) | Tg (TMA) | °C | 211.4 | 188.5 | 185.6 | 126.9 |
| | | $\alpha 1$ | ppm/°C | 77.6 | 74.4 | 85.2 | 71.1 |
| | | $\alpha 2$ | ppm/°C | 167.3 | 172.4 | 167.4 | 178.9 |
| | Heat resistance (DMA) (3°C/min) | Tg (DMA-tanδ) | °C | 224.2 | 177.5 | 215.1 | 114.1 |
| | | Tg (DMA-E') | °C | 203.9 | 152.8 | 161.4 | 93.5 |
| | Mechanical characteristic (bending test) | Bending strength | MPa | 114.6 | 128.8 | 96.3 | 124.1 |
| | | Bending modulus | MPa | 2907.1 | 2975.5 | 3173.8 | 2673.5 |
| | | Bending elongation | t GL | 4.3 | 5.1 | 3.1 | 6.7 |
| | Transparency | Transmittance (400nm) [150°C×0h] | % | 89.6 | 89.8 | 88.1 | 78.5 |
| | | Transmittance (400nm) 1156°C×24h) | % | 85.0 | 83.4 | 80.6 | 47.0 |
| | | Transmittance (400nm) [150°C×50h) | % | 80.4 | 77.6 | 75.9 | 41.7 |
| | Water absorption | Transmittance [23°C×24h] | % | 0.26 | 0.37 | 0.40 | 0.18 |

Note that the brevity codes in Table 1 represent the followings.

(Epoxy compound)

Celloxide 2021P: trade name, "Celloxide 2021P" [3,4-epoxycyclohexylmethyl(3,4-epoxy)cyclohexane carboxylate, manufactured by Daicel Corporation]
EHPE 3150: trade name, "EHPE3150", [1,2-epoxy-4-(2-oxyranyl)cyclohexene adduct of 2,2-bis(hydroxymethyl)-1-butanol (Mw: about 2000), manufactured by Daicel Corporation]
YD-128: trade name, "YD-128" [bisphenol A epoxy resin, manufactured by Nippon Steel Chemical Co., Ltd.]

(Curing agent)

RIKACID MH-700F: trade name, "RIKACID MH-700F" [4-methylhexahydrophthalic anhydride/hexahydrophthalic anhydride = 70/30, manufactured by New Japan Chemical Co., Ltd.]

(Curing accelerator)

U-CAT 12XD: trade name, "U-CAT 12XD" [manufactured by San-Apro Ltd.]

(Diluent)

EG: trade name, "ethylene glycol" [manufactured by Wako Pure Chemical Industries Ltd.]

As shown in Table 1, a cured product (Example 1) of the curable epoxy resin composition of the present invention had high glass-transition temperature and high transparency, a low degree of reduction in transparency during heating and excellent balance between heat resistance and transparency. More specifically, the curable epoxy resin composition of the present invention (Example 1) had low viscosity and was excellent in handling compared to a composition not containing the alicyclic epoxy compound (A), for example, compositions obtained in Comparative Examples 1 to 3. In addition, a cured product had a high glass-transition temperature and a high level transparency compared to the cured products obtained in Comparative Examples 1 to 3 and further had most excellent transparency maintaining rate during heating.

Industrial Applicability

The curable epoxy resin composition of the present invention can be applied to various uses including a coating agent, an ink, an adhesive, a sealant, a sealing agent, a resist, a composite material [for example, fiber reinforced plastic (FRP) such as CFRP and GFRP], a transparent substrate, a transparent film or sheet, an optical material (e.g., an optical lens), a stereolithographic material and an electronic material (e.g., an electronic paper, a touch panel, a solar cell substrate, an optical waveguide, a light guide plate, a holographic memory), a machine-part material, an electrical-part material, an auto-part material, a civil engineering and construction material, a molding material, a plastic forming material and a solvent.

## Claims

**1.** A curable epoxy resin composition comprising an alicyclic epoxy compound (A) represented by the following formula (1):

[Formula 1]

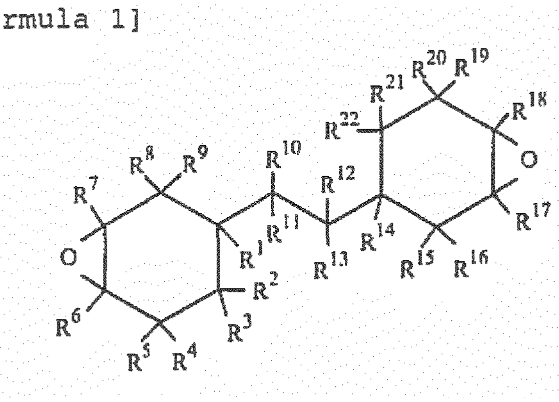

(1)

wherein $R^1$ to $R^{22}$, which may be the same or different, each represent a hydrogen atom, a methyl group or an ethyl group,
and a curing agent (B).

**2.** The curable epoxy resin composition according to Claim 1, further comprising a curing accelerator (C).

**3.** A cured product obtained by curing the curable epoxy resin composition according to Claim 1 or 2.

**INTERNATIONAL SEARCH REPORT**

International application No. PCT/JP2014/061601

A. CLASSIFICATION OF SUBJECT MATTER
*C08G59/24*(2006.01)i, *C08L63/00*(2006.01)i

According to International Patent Classification (IPC) or to both national classification and IPC

B. FIELDS SEARCHED

Minimum documentation searched (classification system followed by classification symbols)
C08G59/24, C08L63/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2012-505256 A (Sumitomo Bakelite Co., Ltd.), 01 March 2012 (01.03.2012), entire text<br>& US 2010/0094030 A1 & EP 2350062 A<br>& WO 2010/042939 A1 & KR 10-2011-0067162 A<br>& CN 102216293 A & TW 201211013 A | 1-3 |
| A | JP 2007-238868 A (ADEKA Corp.), 20 September 2007 (20.09.2007), entire text<br>& US 2009/0074374 A1 & EP 1995264 A1<br>& WO 2007/105556 A1 & KR 10-2009-0006086 A<br>& CN 101410432 A & TWB 00I402285 | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 July, 2014 (01.07.14) | 08 July, 2014 (08.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2014/061601

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-275169 A (Daicel Chemical Industries, Ltd.), 25 September 2002 (25.09.2002), entire text & US 2003/0059618 A1 & US 2004/0242839 A1 & EP 1389615 A1 & EP 2031006 A1 & WO 2002/076966 A1 & CA 2439608 A & CN 1458927 A & CN 1690118 A & KR 10-0877124 B1 & TWB 00I298065 | 1-3 |
| A | JP 2002-20462 A (Asahi Denka Co., Ltd.), 23 January 2002 (23.01.2002), entire text (Family: none) | 1-3 |
| A | JP 2-225580 A (Ricoh Co., Ltd.), 07 September 1990 (07.09.1990), entire text (Family: none) | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013099976 A
- JP 63264625 A
- JP 63012623 A
- JP 59011317 A